# EUROPEAN PATENT SPECIFICATION

(11) **EP 2 387 259 B1**
(45) Date of publication and mention of the grant of the patent: **15.10.2014**
(21) Application number: 11003818.9
(22) Date of filing: 10.05.2011
(51) Int. Cl.: H04W 4/14, H04L 12/725, H04W 92/02, H04W 8/26, H04W 88/18, H04L 12/58, H04L 29/08

(54) **Method for routing a message**
Verfahren zum Routen einer Nachricht
Procédé de routage d'un message

(30) Priority: 10.05.2010 EP 10004915; 10.05.2010 US 332905 P
(43) Date of publication of application: 16.11.2011
(73) Proprietor: T-Mobile Nederland BV, 2521 CC Den Haag (NL)
(72) Inventor: Ramdas, Suresh, 2994 DT Barendrecht (NL)
(74) Representative: Schwöbel, Thilo K.

(56) References cited:
- EP-A1- 1 377 086
- WO-A2-2008/118471
- FR-A1- 2 838 280

## Description

The present invention relates to a method, a system, a program and a computer program product for routing, by a first operator, a first message to a second operator and a second message to a third operator.

Routing methods are generally known. For example, document DE 19859081 C1 describes a routing within or between at least one network. This document discloses a method for routing messages in a telecommunication network, wherein the telecommunication network comprises a network entity with an address register that routes the messages according to participant-specific data (e.g. IMSI). Further examples of such routing methods can be found in WO 2008/118471 A2 and FR 2 838 280 A1.

The termination of messages between networks usually requires to have a interworking agreement established between the networks or between the operators of the networks. Such interworking agreements are also called AA.19 agreements, especially with respect to the termination of SMS messages (short message system). Usually, it is burdensome for an operator to have interworking agreements with each and every other network operator. When a message needs to be routed to an operator with which no interworking agreement exists, it is known to use the transit service of a broker or broker transit operator. Such a routing of the message using the broker or broker transit operator. This means that in case that a mobile operator does not have interworking agreements with all other operators, but only with some (e.g. national) operators in a specific foreign destination country, the operator would need to route messages via the broker's service network assuming the broker has (bilateral) interworking agreements with all the national operators in the specific foreign country. A disadvantage of the routing of the message via the broker's network is that it is generally more expensive than the routing directly to the destination operator (with which the operator has interworking agreements).

This is only one drawback of the prior art that is solved by the present invention explained in the following.

### SUMMARY

An object of the present invention is to provide a method, a system, a program and a computer program product for routing a message that is easy to implement and cost effective when operated.

The object of the present invention is achieved by a method for routing, by a first operator, a first message to a second operator and a second message to a third operator, wherein a direct interworking agreement is in place between the first operator and the second operator, wherein no direct interworking agreement is in place between the first operator and a third operator, wherein a direct interworking agreement is in place between a broker transit operator and the third operator, wherein the method comprises the following steps:
- the first operator transmits a request for routing information (SRIforSM) to the broker transit operator both for routing the first message and for routing the second message,
- subsequently, the first operator receives a routing information from the broker transit operator,
- subsequently, the first message is routed according to a first routing alternative from the first operator to the second operator, and the second message is routed according to a second routing alternative from the first operator to the broker transit operator and from the broker transit operator to the third operator,
   wherein the choice between the first routing alternative and the second routing alternative is dependent on the routing information received by the first operator from the broker transit operator. The object of the present invention is also achieved by a method for routing a message, wherein a second operator's subscriber(s) is directly reachable by a first operator, wherein a third operator's subscriber(s) is directly unreachable by the first operator, wherein the first operator receives a routing information from a broker transit operator, wherein the message is routed according to one out of a first routing alternative and a second routing alternative, wherein the first routing alternative comprises the message being routed from the first operator to the second operator, wherein the second routing alternative comprises the message being routed from the first operator to the broker transit operator and from the broker transit operator to the third operator, wherein the choice between the first routing alternative or the second routing alternative is dependent on the routing information.

According to the present invention, the first operator (or first telecommunications GSM network) needs to route a first message, especially an SMS message, to a second operator (or second GSM network) and a second message, especially also an SMS message, to a third operator (or third network). According to the present invention, it is assumed that there exists an interworking agreement (i.e. a direct termination possibility) between the first and the second operators but no direct interworking agreement between the first and the third operators, hence for routing the second message, the use of a broker transit operator is required. According to the present invention, it is proposed to send a request for routing information (SRIforSM) from the first operator to the broker transit operator both for routing the first message and the second message. The transmission of a request for routing information (by the first operator to the broker transit operator) is intended to receive an answer from the broker transit operator such that it is possible to determine
- whether the situation of the first message is applicable (i.e. the first routing alternative can be applied including not using the broker transit operator for actually routing the (first) message) or
- whether the situation of the second message is applicable (i.e. the second routing alternative is to be applied including the use of the broker transit operator for routing the (second) message first to the broker transit operator and then to the third operator).

The first operator can also be called the original or home provider. According to the first routing alternative the home provider routes the (first) message directly to the second operator (which is also called destination or target provider with interworking agreement). The (first) message is not routed via the broker transit operator but the broker transit operator is used to determine (through analysing the routing information obtained from the broker transit operator) that the first routing alternative is to be applied. According to the second routing alternative, the first operator (or home provider) firstly routes the (second) message to the broker transit operator (or broker provider) and the broker transit operator (or broker provider) then routes the message to the third operator. According to the present invention the second operator is the destination operator with direct interworking agreement in the situation of the first routing alternative whereas the third operator is the destination operator with no direct interworking agreement in the situation of the second routing alternative.

According to the present invention it is advantageously possible for the first operator to decide whether the (first) message needs to be routed via the broker transit operator (which can potentially be quite expensive due to the fact that the first operator has no direct (AA.19) interworking agreement with the third operator) or whether the (second) message can be routed directly to the second operator (due to an existing (direct) AA.19 interworking agreement between the first operator and the second operator). Therefore it is possible to use the broker service (for actually routing the second message) only if the broker service is needed. Thus the routing of messages by the first operator can advantageously be provided in a more cost effective manner. According to the present invention, (direct) interworking (or roaming) agreements are especially so-called AA.19 agreements, according to the GSM (Global System of Mobile Communication) Association, Official Document AA.19 (Addendum to the International GSM Roaming Agreement: SMS Interworking Agreement, 13.1, 6 September 2010).

In the following, the present invention is described for the sake of exemplarily illustration only. But it will be understood by a person skilled in the art that other modifications or varieties of the invention are possible without departing from the scope of the invention as defined in the appended claims. Such modifications are therefore to be considered as falling within the scope of the invention as defined in the appended claims and hence forming part of the invention as herein described or exemplified. Accordingly the exemplary description is to be regarded in an illustrative sense rather than in a restrictive sense.

According to the present invention it is preferred that the first and second messages are transferred using the Intelligent GateWay system. The Intelligent GateWay system (also called IGW) has advantageously a comparatively wide global coverage all together.

According to the present invention it is furthermore preferred that the routing information comprises an International Mobile Subscriber Identification, the International Mobile Subscriber Identification comprising a mobile country code (MCC) and a mobile network code (MNC).

Furthermore, it is preferred according to the present invention that the choice between the first routing alternative and the second routing alternative depends on the mobile country code and the mobile network code.Therefore, it is advantageously possible to check if there is a interworking agreement between the first operator and the destination provider (second or third operator).

According to the present invention it is preferred that in case of the first routing alternative, the first operator transmits a subsequent request for routing information to the second operator. Thereby, it is advantageously possible that in the first routing alternative, the broker transit operator is only required for providing the routing information as an answer to the initial request for routing information from the first operator.

The invention further relates to a system for routing, by a first operator, a first message to a second operator and a second message to a third operator, wherein a direct interworking (AA.19) agreement is in place between the first operator and the second operator, wherein no direct interworking agreement is in place between the first operator and a third operator, wherein a direct interworking agreement is in place between a broker transit operator and the third operator, wherein the system is arranged such that:
- both for routing the first message and for routing the second message, a transmission of a request for routing information is provided from the first operator to the broker transit operator,
- a routing information is received by the first operator from the broker transit operator,
- routing of the first message occurs according to a first routing alternative from the first operator to the second operator, and routing of the second message occurs according to a second routing alternative from the first operator to the broker transit operator and from the broker transit operator to the third operator,
   wherein the choice between the first routing alternative and the second routing alternative is dependent on the routing information received by the first operator from the broker transit operator.

Furthermore, the invention relates to a system for routing a message, wherein a second operator's subscriber(s) is directly reachable by a first operator, wherein a third operator's subscriber(s) is directly unreachable by the first operator, wherein the first operator receives a routing information from a broker transit operator, wherein the message is routed according to one out of a first routing alternative and a second routing alternative, wherein the first routing alternative comprises the message being routed from the first operator to the second operator, wherein the second routing alternative comprises the message being routed from the first operator to the broker transit operator and from the broker transit operator to the third operator, wherein the choice between the first routing alternative or the second routing alternative is dependent on the routing information.

Also with respect to the inventive system, it is preferred
- to use a short message system for transferring the first and second messages,
- that the routing information comprises an International Mobile Subscriber Identification, the International Mobile Subscriber Identification comprising a mobile country code and a mobile network code, and/or
- that the choice between the first routing alternative and the second routing alternative depends on the mobile country code and the mobile network code.

The present invention further relates to a program comprising program code which, when executed on a computer, causes the computer to perform an inventive method according to the present invention.

Furthermore, the present invention further relates to a program comprising a computer readable program code for routing a message, wherein a second operator's subscriber(s) is directly reachable by a first operator, wherein a third operator's subscriber(s) is directly unreachable by the first operator, wherein the first operator receives a routing information from a broker transit operator, wherein the message is routed according to one out of a first routing alternative and a second routing alternative, wherein the first routing alternative comprises the message being routed from the first operator to the second operator, wherein the second routing alternative comprises the message being routed from the first operator to the broker transit operator and from the broker transit operator to the third operator, wherein the choice between the first routing alternative or the second routing alternative is dependent on the routing information.

The present invention further relates to a computer program product for routing, by a first operator, a first message to a second operator and a second message to a third operator, comprising a computer program stored on a storage medium, the computer program comprising program code which, when executed on a computer, cause the computer to perform an inventive method according to the present invention.

Furthermore, the present invention relates to a computer program product comprising a computer readable program code for routing a message, wherein a second operator is directly reachable by a first operator, wherein a third operator is directly unreachable by the first operator, wherein the first operator receives a routing information from a broker transit operator, wherein the message is routed according to one out of a first routing alternative and a second routing alternative, wherein the first routing alternative comprises the message being routed from the first operator to the second operator, wherein the second routing alternative comprises the message being routed from the first operator to the broker transit operator and from the broker transit operator to the third operator, wherein the choice between the first routing alternative or the second routing alternative is dependent on the routing information.

### BRIEF DESCRIPTION OF THE DRAWINGS

Figure 1 shows schematically a cell of a mobile radio network.

Figure 2 shows schematically the different networks or operators used for routing the first and second message.

Figure 3 shows schematically a system architecture.

Figure 4 shows schematically an exemplary workflow.

Figures 5 and 6 show schematically exemplary embodiments.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

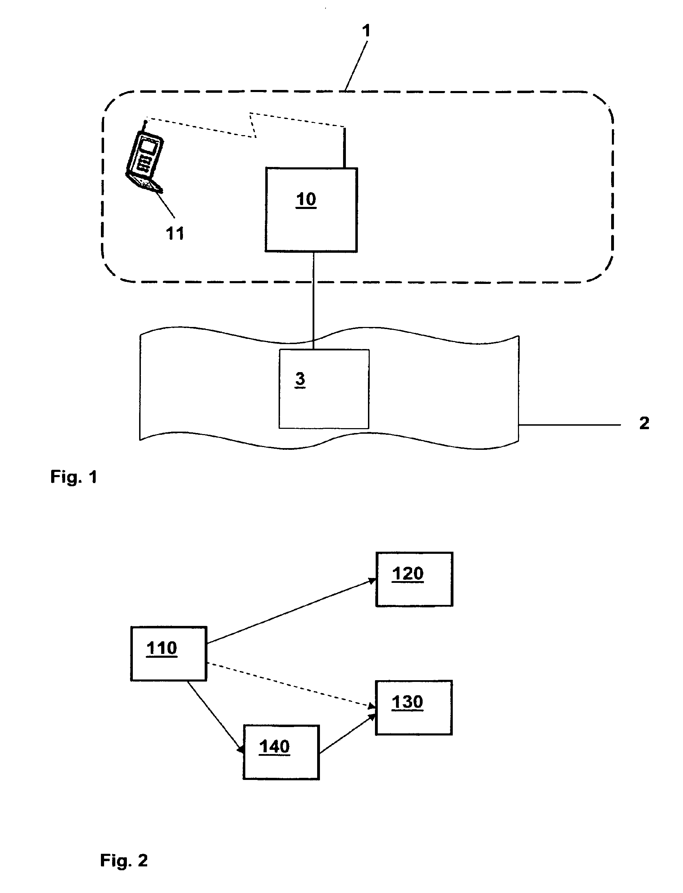

Fig. 1 shows schematically a cell 1 of a cellular mobile radio network. The cellular mobile radio network comprises a core network 2 with a lookup table 3 and a multitude of base stations, one thereof, a base station 10, is connected to a client 11.

Fig. 2 shows schematically the different networks or operators used for routing the first and second message. A first network or first operator is designated by reference sign 110. In the context of the present invention, it is assumed that a message is to be routed to a destination network. According to the present invention, two different alternative possibilities exist for destination networks or destination operators, namely the second operator (or second network) indicated by reference sign 120, and the third operator (or third network) indicated by reference sign 130. In the context of the present invention, a message to be delivered (irrespective whether it is a Mobile Originating (MO) case or a Mobile Terminating (MT) case) to the second operator 120 is called a first message whereas a message to be delivered (irrespective whether it is a Mobile Originating (MO) case or a Mobile Terminating (MT) case) to the third operator 130 is called a second message. It is assumed that a direct AA.19 interworking agreement exists between the first operator 110 and the second operator 120 (indicated by a drawn-through arrow in Figure 2 between the first operator 110 and the second operator 120). Furthermore, it is assumed that no direct AA.19 interworking agreement exists between the first operator 110 and the third operator 130 (indicated by dashed line arrow in Figure 2 between the first operator 110 and the third operator 130). The routing of a second message (i.e. to be sent to the third operator 130) therefore necessarily requires the use of the broker transit operator 140 (indicated by drawn-through arrows between the first operator 110 and the broker transit operator 140 as well as between the broker transit operator 140 and the third operator 130). Both for the first and the second message, the broker transit operator is queried (by the first operator 110) to provide routing information in order to decide which routing alternative to apply.

The invention is based on the concept to route SMS-MT (mobile terminated) messages and SMS-MO (mobile originated) messages based on a destination IMSI (International Mobile Subscriber Identity) prefix, i.e. MCC (Mobile County Code) and MNC (mobile network code) combination determining uniquely the mobile (destination) operator to which the message needs to be routed, i.e. either the second operator 120 or the third operator 130. An Intelligent GateWay (IGW) system first queries the broker transit operator 140 or broker service network 140 for routing information. The broker transit operator 140 returns as part of this SendRoutingInfoForSM (SRIforSM) MAP (Mobile Application Part) Operation the real IMSI but fake VMSC (Visited Mobile Switching Centre) address (e.g. Global Title GT of the broker's SMS GateWay). Based on the MCC and MNC combination the IGW system checks whether a message is a first message, i.e. needs to be routed to the second operator 120, or a second message, i.e. needs to be routed to the third operator 130. Based on this information, it can be determined whether there is a direct SMS interworking agreement (AA.19 interworking agreement) with the destination network (which is the case for the second operator 120 but not for the third operator 130). In case the first operator 110 has a direct SMS interworking agreement, a subsequent SendRoutingInfoForSM (SRIforSM) message would be sent to the destination network (i.e. to the second operator 120) to retrieve the real VMSC address. If the MCC and MNC is not related to an existing (AA.19) interworking agreement with the first operator 110 (i.e. the message is a second message to be routed according to the second routing alternative), the ForwardSM message is routed to the broker transit operator's 140 gateway addressing the initial returned fake VMSC address. The IGW system (of the first operator 110) can either be placed in the MO (Mobile Originated)-leg or in the MT (Mobile Terminated)- leg. In case of placing the IGW system in the MO-leg, the triggering of the SendRoutingInfoForSM message to the broker transit operator's 140 service network is on the received MO-ForwardSM message. In case of placing the IGW system in the MT-leg, the triggering of the SendRoutingInfoForSM message to the broker transit operator's 140 service network is on the SendRoutingInfoForSM message received from the SMSC (Short Message Service Centre) or the GMSC (Gateway Mobile switching Centre).

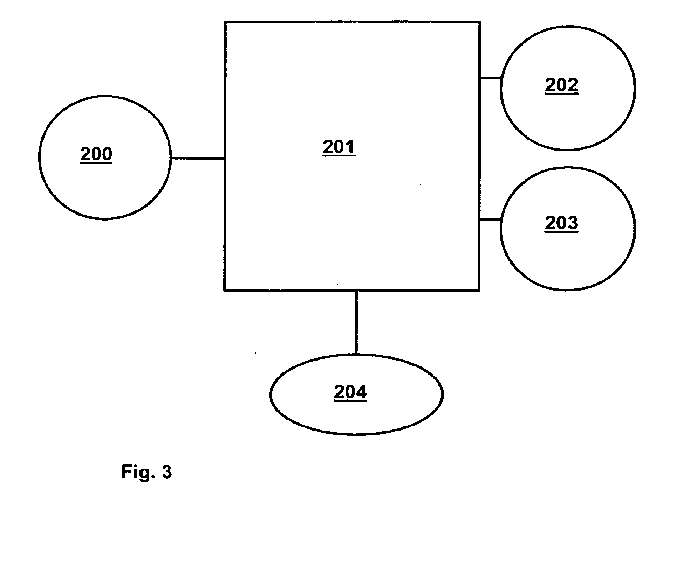

Fig. 3 depicts an exemplary system architecture. The IGW system 201 interfaces on the inbound connection to the Mobile Network Operator (MNO) SS7 network 200 of the first operator 110 and on the outbound connections to the Service Network 203 of the transit operator 140 and international SS7 network 202. The system architecture of the IGW system 201 comprises the following logical entities. A Virtual SMSC to process the incoming MO-ForwardSM message. A Virtual HLR (Home location register) to reply to the SendRoutingInforForSM message received from the Operator's SMSC or GMSC. A Virtual GMSC to trigger the SendRoutingInforForSM message to the Service Network 203 of the broker transit operator 140 and/or international SS7 network 202. A Virtual VMSC to onwards route the MO-ForwardSM message to the operator SMSC or IWMSC. The SMS roaming partners (defined by MCC+MNC combination) are kept in repository 204.

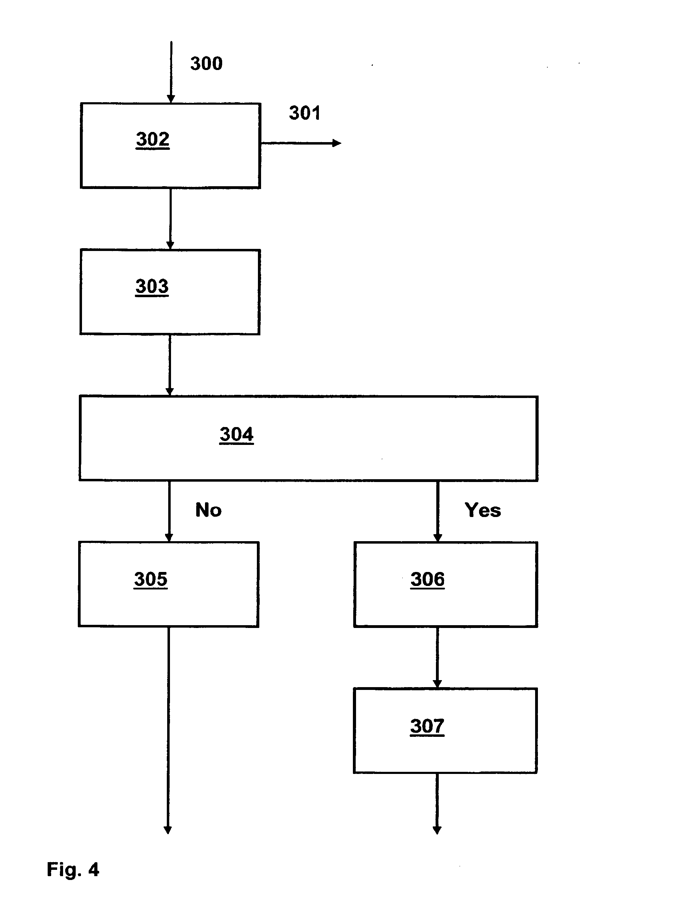

Fig. 4 depicts an exemplary processing flow in the IGW 201. Incoming traffic (represented by processing step 300) is handled as a normal message (internal to the first operator's 110 network) if no international destination address is provided, which is represented by processing step 301. If an international destination address is provided (represented by processing step 302), the IGW system 201 sends a SRI_SM for destination subscriber to the broker transit operator's 140 GateWay (GW), which is represented by processing step 303. In processing step 304, it is determined whether the MCC+MNC belong to a roaming partner the first operator 110 has an interworking (AA.19) agreement with. If no (AA.19) interworking agreement exists (which corresponds to the situation of routing a second message to the third operator 130), the system sends an ForwardSM to the broker transit operator's 140 gateway (Broker GW) in processing step 305. If yes (i.e. there exists a (AA.19) interworking agreement (which corresponds to the situation of routing a first message to the second operator 120)), the system sends a SRI_SM for destination subscriber to the international SS7 network 306, i.e. to the second operator 120. In step 307 the system sends the ForwardSM to the roaming partner network, i.e. to the second operator 120.

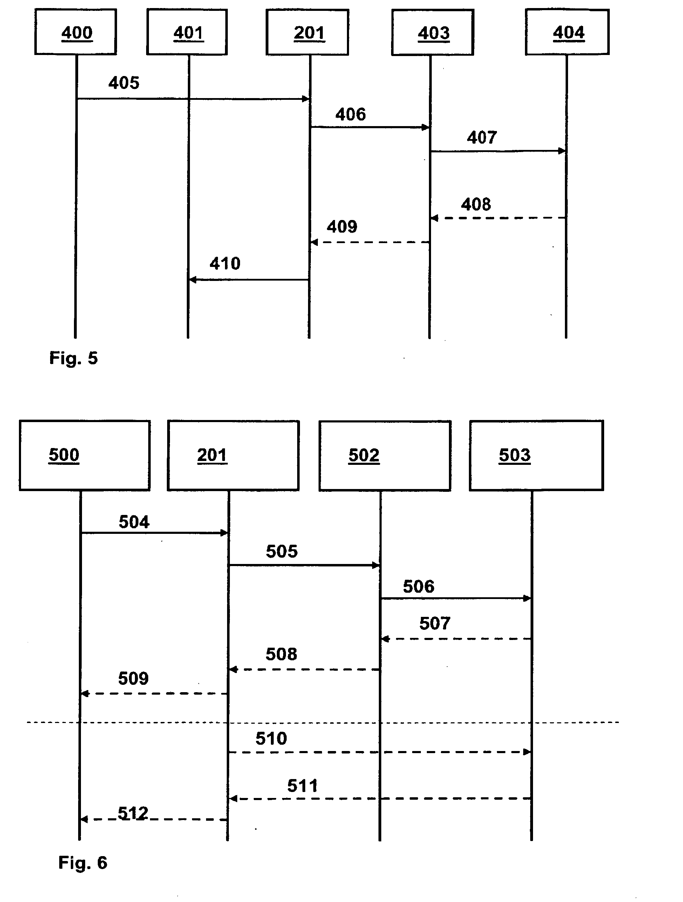

Fig. 5 depicts an exemplary callflow in the MO-leg. In processing step 405, the MO-ForwardSM message from the VMSC-A 400 is received in the IGW-system 201 with destination address being an international number. In processing step 406, the IGW 201 triggers the initial SendRoutingInfoForSM message to the broker transit operator's 140 gateway 403 by adding a prefix in the destination international address. In processing step 407, the broker transit operator's 140 gateway 403 triggers the SendRoutingInfoForSM message to the foreign (i.e. destination) HLR 404 (i.e. to either the second or third operator's 120, 130 Home Location Register) to retrieve the destination subscriber IMSI and VMSC address. In processing step 408, the foreign HLR 404 returns the destination subscriber IMSI and VMSC address where the destination customer is located. In processing step 409, the broker transit operator's 140 gateway 403 returns the real IMSI but a fake VMSC address as part of the SendRoutingInfoForSM MAP operation to the IGW 201. In processing step 410 based on the returned IMSI MCC+MNC the IGW 201 checks whether there is an SMS interworking agreement (i.e. an AA.19 interworking agreement) with this destination network (i.e. the second or third operators 120 ,130 network). If not, the IGW 201 modifies the destination number with a prefix to send subsequent retries by the SMSC 401 to the broker's gateway 403. If yes, the IGW 402 leaves the destination number unchanged which would route subsequent messages from the SMSC 401 directly to the destination network and not via the broker's service network.

Fig. 6 depicts an exemplary callflow in the MT-leg. In processing step 504, the SMSC 500 or GMSC sends the SendRoutingInforForSM MAP message to the IGW 201 for international destinations. In processing step 505, the IGW 201 triggers the SendRoutingInfoForSM to the broker transit operator's 140 gateway 502 by adding a prefix in the SCCP Called Address. In processing step 506, the broker transit operator's 140 gateway 502 triggers the SendRoutingInfoForSM message to the Foreign HLR 503 (i.e. the Home Location Register of the destination operator: either the second operator 120 or the third operator 130) to retrieve the destination subscriber IMSI and VMSC address. In processing step 507, the Foreign HLR 503 returns the destination subscriber IMSI and VMSC address where the customer is located. In processing step 508, the broker transit operator's 140 gateway 502 returns the real IMSI but a fake VMSC address as part of the SendRoutingInfoForSM MAP Operation to the IGW 201. In processing step 509, based on the returned IMSI MCC+MNC, the IGW 201 checks whether there is an SMS interworking agreement (i.e. an AA.19 interworking agreement) with this destination network. If not, the IGW 201 will pass the fake VMSC address to the SMSC 500, and the routing of the (second) message will be handled by the broker transit operator 140, i.e. sent to the destination operator (in this case the third operator 130) via the broker transit operator 140. If yes, the flow continues with processing steps 510, 511 and 512. In processing step 510, in case the first operator 110 (or mobile network Operator) does have an SMS interworking agreement (AA.19 interworking agreement) with the destination operator (which means that the destination operator is the second operator 120), a subsequent SendRoutingInfoForSM message is sent directly to the destination network (i.e. to the second operator 120) without prefixing the destination network. In processing step 511, the foreign HLR 503 returns the destination subscriber IMSI and VMSC address where the customer is located. In step 512 the IGW 501 passes the real subscriber IMSI and VMSC address to the SMSC 500 to terminate the MT message.

## Claims

1. Method for routing, by a first operator (110), a first message to a second operator (120) and a second message to a third operator (130), wherein a direct interworking agreement is in place between the first operator (110) and the second operator (120), wherein no direct interworking agreement is in place between the first operator (110) and the third operator (130), wherein a direct interworking agreement is in place between a broker transit operator (140) and the third operator (130), wherein the method comprises the following steps:
-- the first operator (110) transmits a request for routing information to the broker transit operator (140) both for routing the first message and for routing the second message,
-- subsequently, the first operator (110) receives a routing information from the broker transit operator (140),
-- subsequently, the first message is routed according to a first routing alternative from the first operator (110) to the second operator (120), and the second message is routed according to a second routing alternative from the first operator (110) to the broker transit operator (140) and from the broker transit operator (140) to the third operator (130), wherein the choice between the first routing alternative and the second routing alternative is dependent on the routing information received by the first operator (110) from the broker transit operator (140).

2. Method according to claim 1, wherein the first and second messages are transferred using a short message service.

3. Method according to one of the preceding claims, wherein the routing information comprises an International Mobile Subscriber Identity, the International Mobile Subscriber Identity comprising a mobile country code and a mobile network code.

4. Method according to claim 3, wherein the choice between the first routing alternative and the second routing alternative depends on the mobile country code and the mobile network code.

5. Method according to one of the preceding claims , wherein in case of the first routing alternative, the first operator (110) transmits a subsequent request for routing information to the second operator (120).

6. System for routing, by a first operator (110), a first message to a second operator (120) and a second message to a third operator (130), wherein a direct interworking agreement is in place between the first operator (110) and the second operator (120), wherein no direct interworking agreement is in place between the first operator (110) and a third operator (130), wherein a direct interworking agreement is in place between a broker transit operator (140) and the third operator (130), wherein the system is arranged such that:
-- both for routing the first message and for routing the second message, a transmission of a request for routing information is provided from the first operator (110) to the broker transit operator (140),
-- a routing information is received by the first operator (110) from the broker transit operator (140),
-- routing of the first message occurs according to a first routing alternative from the first operator (110) to the second operator (120), and routing of the second message occurs according to a second routing alternative from the first operator (110) to the broker transit operator (140) and from the broker transit operator (140) to the third operator (130), wherein the choice between the first routing alternative and the second routing alternative is dependent on the routing information received by the first operator (110) from the broker transit operator (140).

7. System according to claim 6, wherein the system is arranged such that the first and second messages are transferred using a short message service.

8. System according to claim 6 or 7, wherein the routing information comprises an International Mobile Subscriber Identity, the international Mobile Subscriber Identity comprising a mobile country code and a mobile network code.

9. System according to claim 8, wherein the choice between the first routing alternative and the second routing alternative depends on the mobile country code and the mobile network code.

10. Computer program product for routing, by a first operator (110), a first message to a second operator (120) and a second message to a third operator (130), comprising a computer program stored on a storage medium, the computer program comprising program code which, when executed on a computer, cause the computer to perform all the steps of a method according to one of claims 1 to 5.

## Patentansprüche

1. Ein Verfahren zur Weiterleitung einer ersten Nachricht durch einen ersten Bediener (110) an einen zweiten Bediener (120) und einer zweiten Nachricht an einen dritten Bediener (130), wobei zwischen dem ersten Bediener (110) und dem zweiten Bediener (120) eine direkte Zusammenarbeitsvereinbarung besteht, wobei zwischen dem ersten Bediener (110) und dem dritten Bediener (130) keine direkte Zusammenarbeitsvereinbarung besteht, wobei zwischen einem Vermittlungsbediener (140) und dem dritten Bediener (130) eine direkte Zusammenarbeitsvereinbarung besteht, wobei das Verfahren die folgenden Schritte umfasst:
- der erste Bediener (110) überträgt einen Antrag zur Weiterleitung von Information an den Vermittlungsbediener (140) zur Weiterleitung sowohl der ersten Nachricht als auch zur Weiterleitung der zweiten Nachricht,
- danach erhält der erste Bediener (110) Information zur Weiterleitung vom Vermittlungsbediener (140),
- danach wird die erste Nachricht entsprechend einer ersten Weiterleitungsalternative vom ersten Bediener (110) an den zweiten Bediener (120) weitergeleitet, und die zweite Nachricht wird entsprechend einer zweiten Weiterleitungsalternative vom ersten Bediener (110) an den Vermittlungsbediener (140) und vom Vermittlungsbediener an den dritten Bediener (130) weitergeleitet, wobei die Wahl zwischen der ersten Weiterleitungsalternative und der zweiten Weiterleitungsalternative von der Weiterleitungsinformation abhängt, die von ersten Bediener (110) vom Vermittlerbediener (140) empfangen wird.

2. Ein Verfahren entsprechend Anspruch 1, wobei die erste und zweite Nachricht unter Verwendung eines Kurznachrichtendiensts übertragen werden.

3. Ein Verfahren entsprechend einem der vorhergehenden Ansprüche, wobei die Weiterleitungsinformation eine internationale Mobilteilnehmererkennung umfasst, wobei die internationale Mobilteilnehmererkennung eine Mobilländervorwahl und einen Mobilnetzcode umfasst.

4. Ein Verfahren entsprechend Anspruch 3, wobei die Wahl zwischen der ersten Weiterleitungsalternative und der zweiten Weiterleitungsalternative von der Mobilländervorwahl und dem Mobilnetzcode abhängt.

5. Ein Verfahren entsprechend einem der vorhergehenden Ansprüche, wobei im Fall der ersten Weiterleitungsalternative der erste Bediener (110) einen weiteren Antrag zur Weiterleitung von Information an den zweiten Bediener (120) stellt.

6. Ein System zur Weiterleitung einer ersten Nachricht durch einen ersten Bediener (110) an einen zweiten Bediener (120) und einer zweiten Nachricht an einen dritten Bediener (130), wobei zwischen dem ersten Bediener (110) und dem zweiten Bediener (120) eine direkte Zusammenarbeitsvereinbarung besteht, wobei zwischen dem ersten Bediener (110) und dem dritten Bediener (130) keine direkte Zusammenarbeitsvereinbarung besteht, wobei zwischen einem Vermittlungsbediener (140) und dem dritten Bediener (130) eine direkte Zusammenarbeitsvereinbarung besteht, wobei das System so angeordnet ist, dass
- sowohl zur Weiterleitung der ersten Nachricht als auch zur Weiterleitung der zweiten Nachricht eine Übertragung eines Antrags zur Weiterleitung von Information vom ersten Bediener (110) an den Vermittlungsbediener (140) bereitgestellt wird,
- eine Weiterleitungsinformation vom ersten Bediener (110) vom Vermittlerbediener (140) empfangen wird,
- die Weiterleitung der ersten Nachricht entsprechend einer ersten Weiterleitungsalternative vom ersten Bediener (110) an den zweiten Bediener (120) erfolgt und die Weiterleitung der zweiten Nachricht entsprechend einer zweiten Weiterleitungsalternative vom ersten Bediener (110) an den Vermittlungsbediener (140) und vom Vermittlungsbediener (140) an den dritten Bediener (130) erfolgt, wobei die Wahl zwischen der ersten Weiterleitungsalternative und der zweiten Weiterleitungsalternative von der Weiterleitungsinformation abhängt, die von ersten Bediener (110) vom Vermittlerbediener (140) empfangen wird.

7. Ein System entsprechend Anspruch 6, wobei das System so angeordnet ist, dass die erste und zweite Nachricht unter Verwendung eines Kurznachrichtendiensts übertragen werden.

8. Ein System entsprechend Anspruch 6 oder 7, wobei die Weiterleitungsinformation eine internationale Mobilteilnehmererkennung umfasst, wobei die internationale Mobilteilnehmererkennung eine Mobilländervorwahl und einen Mobilnetzcode umfasst.

9. Ein System entsprechend Anspruch 8, wobei die Wahl zwischen der ersten Weiterleitungsalternative und der zweiten Weiterleitungsalternative von der Mobilländervorwahl und dem Mobilnetzcode abhängt.

10. Ein Computerprogrammprodukt zur Weiterleitung einer ersten Nachricht durch einen ersten Bediener (110) an einen zweiten Bediener (120) und einer zweiten Nachricht an einen dritten Bediener (130) bestehend aus einem Computerprogramm, das auf einem Speichermedium gespeichert wird, wobei das Computerprogramm einen Programmcode enthält, der bei Ausführung auf einem Computer verursacht, dass der Computer alle schritte entsprechend eines Verfahrens der Ansprüche 1 bis 5 durchführt.

## Revendications

1. Un procédé d'acheminement, par un premier opérateur (110), d'un premier message à un deuxième opérateur (120) et d'un deuxième message à un troisième opérateur (130), où un accord d'interfonctionnement direct est en place entre le premier opérateur (110) et le deuxième opérateur (120), où aucun accord d'interfonctionnement direct n'est en place entre le premier opérateur (110) et le troisième opérateur (130), où un accord d'interfonctionnement direct est en place entre un opérateur de transit de courtage (140) et le troisième opérateur (130), où le procédé comprend les opérations suivantes :
- le premier opérateur (110) transmet une demande d'acheminement d'informations à l'opérateur de transit de courtage (140) à la fois pour l'acheminement du premier message et l'acheminement du deuxième message,
- subséquemment, le premier opérateur (110) reçoit une information d'acheminement de l'opérateur de transit de courtage (140),
- subséquemment, le premier message est acheminé selon une première variante d'acheminement du premier opérateur (110) au deuxième opérateur (120), et le deuxième message est acheminé selon une deuxième variante d'acheminement du premier opérateur (110) à l'opérateur de transit de courtage (140) et de l'opérateur de transit de courtage (140) au troisième opérateur (130), où le choix entre la première variante d'acheminement et la deuxième variante d'acheminement dépend de l'information d'acheminement reçue par le premier opérateur (110) de l'opérateur de transit de courtage (140).

2. Le procédé selon la Revendication 1, où les premier et deuxième messages sont transférés au moyen d'un service de messages courts.

3. Le procédé selon l'une quelconque des Revendications précédentes, où l'information d'acheminement contient une identité internationale d'abonné mobile, l'identité internationale d'abonné mobile contenant un code de pays mobile et un code de réseau mobile.

4. Le procédé selon la Revendication 3, où le choix entre la première variante d'acheminement et la deuxième variante d'acheminement dépend du code de pays mobile et du code de réseau mobile.

5. Le procédé selon l'une quelconque des Revendications précédentes, où dans le cas de la première variante d'acheminement, le premier opérateur (110) transmet une demande subséquente d'acheminement d'informations au deuxième opérateur (120).

6. Un système d'acheminement, par un premier opérateur (110), d'un premier message à un deuxième opérateur (120) et d'un deuxième message à un troisième opérateur (130), où un accord d'interfonctionnement direct est en place entre le premier opérateur (110) et le deuxième opérateur (120), où aucun accord d'interfonctionnement direct n'est en place entre le premier opérateur (110) et un troisième opérateur (130), où un accord d'interfonctionnement direct est en place entre un opérateur de transit de courtage (140) et le troisième opérateur (130), où le système est agencé de sorte que :
- à la fois pour l'acheminement du premier message et l'acheminement du deuxième message, une transmission d'une demande d'acheminement d'informations est fournie du premier opérateur (110) à l'opérateur de transit de courtage (140),
- une information d'acheminement est reçue par le premier opérateur (110) de l'opérateur de transit de courtage (140),
- l'acheminement du premier message s'effectue selon une première variante d'acheminement du premier opérateur (110) au deuxième opérateur (120), et l'acheminement du deuxième message s'effectue selon une deuxième variante d'acheminement du premier opérateur (110) à l'opérateur de transit de courtage (140) et de l'opérateur de transit de courtage (140) au troisième opérateur (130), où le choix entre la première variante d'acheminement et la deuxième variante d'acheminement dépend de l'information d'acheminement reçue par le premier opérateur (110) de l'opérateur de transit de courtage (140).

7. Le système selon la Revendication 6, où le système est agencé de sorte que les premier et deuxième messages soient transférés au moyen d'un service de messages courts.

8. Le système selon la Revendication 6 ou 7, où l'information d'acheminement contient une identité internationale d'abonné mobile, l'identité internationale d'abonné mobile contenant un code de pays mobile et un code de réseau mobile.

9. Le système selon la Revendication 8, où le choix entre la première variante d'acheminement et la deuxième variante d'acheminement dépend du code de pays mobile et du code de réseau mobile.

10. Un produit de programme informatique destiné à l'acheminement, par un premier opérateur (110), d'un premier message à un deuxième opérateur (120) et d'un deuxième message à un troisième opérateur (130), comprenant un programme informatique conservé en mémoire sur un support à mémoire, le programme informatique contenant du code de programme qui, lorsqu'il est exécuté sur un ordinateur, amène l'ordinateur à exécuter toutes les opérations d'un procédé selon l'une quelconque des Revendications 1 à 5.
